(19) Europäisches Patentamt / European Patent Office / Office européen des brevets

(11) **EP 2 442 386 A1**

(12) **EUROPEAN PATENT APPLICATION**
published in accordance with Art. 153(4) EPC

(43) Date of publication:
**18.04.2012 Bulletin 2012/16**

(51) Int Cl.:
*H01M 4/48* (2010.01)     *H01M 4/04* (2006.01)
*H01M 10/05* (2010.01)

(21) Application number: **10786288.0**

(22) Date of filing: **22.02.2010**

(86) International application number:
**PCT/KR2010/001086**

(87) International publication number:
**WO 2010/143805 (16.12.2010 Gazette 2010/50)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **08.06.2009 KR 20090050475**

(71) Applicant: **Industry-University Cooperation Foundation Hanyang University Seongdong-gu Seoul 133-791 (KR)**

(72) Inventors:
• **SUN, Yang-Kook**
 **Seoul 135-240 (KR)**
• **KANG, Han-Byeol**
 **Daejeon 300-768 (KR)**
• **KIM, Dong-Hui**
 **Seoul 133-071 (KR)**

(74) Representative: **von Kreisler Selting Werner Deichmannhaus am Dom Bahnhofsvorplatz 1 50667 Köln (DE)**

(54) **CATHODE MATERIAL FOR A LITHIUM SECONDARY BATTERY, METHOD FOR MANUFACTURING SAME, AND LITHIUM SECONDARY BATTERY INCLUDING SAME**

(57)     The present invention relates to a cathode active material for a lithium secondary battery, a method of preparing thereof and a lithium secondary battery comprising the same, wherein the cathode active material comprises a compound of formula (I):

$$Li_z(Ni_{1-x-y}Co_xMn_y)O_2 \qquad (I)$$

wherein, $0.97 \leq z \leq 1.1$,

$$0.5 \leq 1\text{-}x\text{-}y \leq 0.8,$$

x:y = 1:1.15 to 1:3.

**Fig. 1**

EP 2 442 386 A1

**Description**

**Field of the Invention**

The present invention relates to a cathode active material for a lithium secondary battery, a method of preparing thereof and a lithium secondary battery comprising the same, and more specifically, to a cathode active material for a lithium secondary battery which shows improved thermal stability, a method of preparing thereof and a lithium secondary battery including the same.

**Background of the Invention**

A battery generates electric power by using a compound which makes electrochemical reaction possible in a cathode and an anode. The representative example of the battery is a lithium secondary battery, which can generate electric power caused by the change of chemical potential when lithium ions are intercalated/deintercalated in a cathode and an anode.

The lithium secondary battery uses materials, which make reversible intercalation/deintercalation of the lithium ions possible, as cathode and anode active materials, and it is prepared by filling an organic electrolyte or polymer electrolyte between the cathode and anode.

As the cathode active material, $LiCoO_2$, $LiNi_{1-x}M_xO_2$ (wherein x is 0.95 to 1, and M is A1, Co, Ni, Mn or Fe), $LiMn_2O_4$ and the like are being used, and among them, $LiCoO_2$ is being mainly used because it has high volumetric energy density, and excellent high temperature characteristics, particularly, the cycle-life characteristic at 60 and the swelling characteristic at 90 .

However, studies for the stability are still being needed with increased the capacity of the lithium secondary battery, and recently, Ni-based $Li[Ni_{1-x-y}Co_xM_y]O_2$ (1-x-y > 0.8) having high capacity characteristic and Ni-Co-Mn-based $Li[Ni_xCo_{1-2x}Mn_x]O_2$ having excellent thermal stability are being actively studied. The Ni-based $LI[Ni_{1-x-y}CoM_y]O_2$ (1-x-y > 0.8) has been studied for more than 10 years in Japan to replace the $LiCoO_2$, but it has difficulty in commercialization because its thermal stability problem is not solved yet. Further, a mixture of $Li[Ni_{1-x-y}Co_xM_y]O_2$-based $LI[Ni_{1/3}Co1_{/3}M_{1/3}]O_2$ with $LiCoO_2$ is being commercialized by Japan Sanyo Electric Co., Ltd. This material can solve the thermal stability problem of the existing Ni-based cathode active material because it is composed of bivalent Ni, trivalent Co, tetravalent Mn, and it also has excellent life characteristic because Mn is fixed to tetravalence while charging/discharging. However, $LI[Ni_{1/3}Co_{1/3}M_{1/3}]O_2$ has problems that it is expensive due to high Co content, and has lower tap density of 1.8 to 2.0 g/cc than $LiCoO_2$ or other cathode active materials having the tap density of 2.5 to 2.7.

In addition, as one kind of $Li[Ni_{i-x-y}Co_xM_y]O_2$-based materials, $Li[Ni_{1/2}Mn_{1/2}]O_2$ is being expected as a future cathode active material because it does not use Co, and therefore, has low cost and excellent thermal stability. However, this material also has problems with high speed charging/discharge because it has lower reversible capacity and electronic conductivity than other materials. The electrochemical characteristic of a Ni-based cathode active material is largely changed according to the molar ratio of Ni:Mn:Co. Therefore, the influence of each material on the electrical and structural characteristics of the cathode active materials should be more studied.

**Summary of the Invention**

Accordingly, it is an object of the present invention to provide a cathode active material for a lithium secondary battery which has excellent thermal stability.

It is another object of the present invention to provide a method of preparing the cathode active material.

It is further another object of the present invention to provide a lithium secondary battery comprising the cathode active material.

In accordance with one aspect of the present invention, there is provided a cathode active material for a lithium secondary battery comprising a compound of formula (I):

$$Li_z(Ni_{1-x-y}Co_xMn_y)O_2 \qquad (I)$$

wherein, $0.97 \leq z \leq 1.1$,

$$0.5 \leq 1\text{-}x\text{-}y \leq 0.8,$$

x:y = 1:1.15 to 1:3.

In accordance with another aspect of the present invention, there is provided a method of preparing the cathode active material for a lithium secondary battery, which comprises the steps of:

a) preparing an aqueous metal solution by adding a nickel raw material, cobalt raw material and manganese raw material to water;
b) preparing a metal hydroxide by adding the aqueous metal solution, a base and a chelating agent to a reactor, stirring thereof, and coprecipitating the nickel, cobalt and manganese under inert atmosphere;
c) mixing the metal hydroxide and a lithium raw material to the molar ratio of 1:1 to 1:1.10, and subjecting thereof to the first heat-treatment at a heating rate of 2 to 10 /min; and

4) subjecting the first heat-treated product to the second heat-treatment process. When preparing the aqueous metal solution, the nickel raw material is used in an amount of 50 to 80 mol%, and the cobalt raw material and the manganese raw material are used as a mixture in an amount of 20 to 50 mol% wherein the molar ratio of the cobalt raw material and the manganese raw material is 1:1.5 to 1:3.

In accordance with further another aspect of the present invention, there is provided a lithium secondary battery which comprises a cathode comprising the cathode active material; an anode comprising an anode active material; and a non-aqueous electrolyte.

## Advantageous Effects of the Invention

The cathode active material according to one embodiment of the present invention, which controls the ratio of Ni, Co and Mn, can show high capacity as well as improved thermal stability.

## Brief Description of Drawings

The above and other objects and features of the present invention will become apparent from the following description of the invention taken in conjunction with the following accompanying drawings, which respectively show:

Fig. 1: A graph showing the result of Differential Scanning Calolimetry (DSC) of the half cells prepared in Example 1 and Comparative Examples 3 and 4 of the present invention.
Fig. 2: A graph showing the result of Differential Scanning Calolimetry (DSC) of the half cells prepared in Example 3 and Comparative Example 1 of the present invention.
Fig. 3: A graph showing the result of high temperature cycle-life characteristic of the half coin cells prepared in Example 1 and Comparative Examples 3 and 4 of the present invention.

## Detailed Description of the Invention

Hereinafter, embodiments of the present invention will be described in detail in order to provide examples without limiting its scope, and the present invention is within the scope of the invention as defined by the claims that follow.

The cathode active material according to one embodiment of the present invention comprises a compound of formula (I):

$$\text{Li}_z(\text{Ni}_{1-x-y}\text{Co}_x\text{Mn}_y)\text{O}_2 \qquad \text{(I)}$$

wherein, $0.97 \leq z \leq 1.1$,

$$0.5 \leq 1\text{-x-y} \leq 0.8,$$

$x:y = 1:1.15$ to $1:3$.

The cathode active material according to one embodiment of the present invention comprises Mn in an amount of 1.5 to 3 times molar ratio based on 1 M Co as shown in formula (I), and if the content of Mn is within the said range, improved thermal stability can be obtained. If Mn is used in an amount of less than 1.5 time based on 1 M Co, the thermal stability and the cycle-life may be reduced, and if it excesses 3 times, the capacity may be reduced due to decreased ion conductivity.

Further, as represented in formula (I), the amount of Ni should be 50 to 80 mol% based on 100 mol% of total cathode active material to show high capacity. If the amount of Ni is less than 50 mol%, the capacity may decrease, and if it excess 80 mol%, the thermal stability and life characteristic may be deteriorated.

Namely, the cathode active material according to one embodiment of the present invention comprises Mn in an amount of 1.5 to 3 times molar ratio based on 1 mole Co as well as Ni in an amount of 50 to 80 mol% based on total cathode active material 100 mol%, Mn, and the contents of Co and Ni should satisfy all of the said ranges. If any one content of Mn, Co and Ni is out of the ranges, improved thermal stability and high capacity can't be obtained. Further, only when three elements except lithium consisting the cathode active material are Mn, Co and Ni and the said ranges are satisfied, the desired thermal stability and high capacity can be obtained, but if any one of the three elements is replaced with other element, the desired effects can't be obtained.

Another embodiment of the present invention relates to a method of preparing the cathode active material.

Firstly, a nickel raw material, a cobalt raw material and a manganese raw material are added to water to prepare an aqueous metal solution. At this time, the amount of the used nickel raw material is 50 to 80 mol%. Further, the amount of the mixture of the cobalt raw material and the manganese raw material is 20 to 50 mol%, and in this range, the molar ratio of the cobalt raw material and the manganese raw material may be 1:1.5 to 1:3, preferably.

The nickel raw material may be nickel sulfate, nickel hydroxide, nickel nitrate, nickel acetate or a mixture thereof, the cobalt raw material may be cobalt sulfate, cobalt hydroxide, cobalt nitrate, cobalt acetate or a mixture thereof. Further, the manganese raw material may be manganese sulfate, manganese hydroxide, manganese nitrate, manganese acetate or a mixture thereof.

The concentration of the prepared aqueous metal solution may be 1.5 to 3 M, and 1.8 to 2.4 M, preferably. When the concentration of the aqueous metal solution is within the above range, it is good to obtain a spherical active material having improved tapped density.

Then, under inert atmosphere, the aqueous metal solution, a base and a chelating agent are put into a reactor and stirred. According to the above process, Ni, Co and Mn are coprecipitated to obtain a metal hydroxide. As the base, an aqueous solution comprising sodium hydroxide, potassium hydroxide or a mixture thereof is preferred to be capable to control pH while supplying a hydroxy group of the coprecipitation process. At this time, pH may be 10 to 12, and 10.5 to 11.5, preferably. When pH is within the above range, the coprecipitation reaction can be properly conducted without remelting of metal from the particle.

The chelating agent helps the particle formation, and, for example, may be ammonia, ethylene diamine ($NH_2CH_2CH_2NH_2$) or a mixture thereof.

The molar concentration of the base may be 1.8 to 2.2 times than that of the aqueous metal solution to cause proper reaction, preferably, and the molar concentration of the chelating agent may be 0.1 to 0.4 times than that of the aqueous metal solution, and 0.2 to 0.3 times, preferably.

The inert atmosphere may be nitrogen gas atmosphere or argon gas atmosphere.

Further, it is preferred to add the aqueous metal solution to the reactor at a rate of 0.2 to 1 liter/hour. When the aqueous metal solution is added at the rate of the above range, uniform metal hydroxide can be obtained.

Preferably, the aqueous metal solution, base and chelating agent can be added to the reactor at a temperature of 40 to 60 . When the temperature of adding the aqueous metal solution, base and chelating agent to the reactor is 40 to 60 , uniform size particle can be obtained.

Then, the metal hydroxide and a lithium raw material are mixed to the molar ratio of 1:1 to 1:1.10. The metal hydroxide and the lithium raw material also can be mixed to the molar ratio of 1:1 to 1:1.05. When the mixing ratio of the metal hydroxide and the lithium raw material is within the above range, high capacity and stable structure can be obtained.

The lithium raw material may be lithium carbonate, lithium hydroxide, lithium nitrate, lithium acetate or a mixture thereof.

The mixture is subjected to the first heat-treatment (pre-calcination) at a heating rate of 2 to 10 /min, and the resulting product is subjected to the second heat-treatment. At this time, the heating rate can be 2 to 5 /min.

Further, the first heat-treatment process can be conducted at 450 to 500 , and the second heat-treatment can be conducted at 800 to 900 . Further, the first heat-treatment can be conducted for 5 to 10 hours, and the second heat-treatment can be conducted for 5 to 20 hours.

When the heating rate, the first heat-treatment and the second heat-treatment are conducted within the above temperature and time range, crystal structure can be appropriately formed so as to make the insertion and removal of the lithium easy.

Further, the first and the second heat-treatments can be conducted under $CO_2$ atmosphere, oxygen atmosphere or air atmosphere.

The cathode active material according to one embodiment of the present invention can be used to a cathode of a lithium secondary battery. The lithium secondary battery comprises a cathode, an anode comprising an anode active material, and a non-aqueous electrolyte.

In order to produce the cathode, a cathode active material composition is prepared by mixing the cathode active material according to one embodiment of the present invention, a conductive agent, a binder and a solvent, and the composition is directly coated onto an aluminum collector and dried; or the cathode active material composition can be casted onto a separate support, a film is detached from the support, and the film is laminated onto an aluminum collector.

In this case, the conductive agent may be carbon black, graphite, metal powder, and the binder may be vinylidene fluoride/hexafluoropropylene copolymer, polyvinylidene fluoride, polyacrylonitrile, polymethylmetacrylate, polytetrafluoroethylene and a mixture thereof. Further, the solvent may be N-methylpyrrolidone, acetone, tetrahydrofuran, decane and the like. At this time, the cathode active material, the conductive agent, the binder and the solvent can be used in an amount commonly used in a lithium secondary battery.

Like the cathode, in order to produce the anode, an anode active material composition is prepared by mixing a anode active material, a binder and a solvent, and the composition is directly coated onto an aluminum collector, or casted onto a separate support, a anode active material film is detached from the support, and the film is laminated onto an aluminum collector. At this time, the anode active material composition may further comprise a conductive agent in case of need.

As the anode active material, a material, which can intercalate/deintercalate a lithium, can be used, and for example, it may be a lithium metal or lithium alloy, cokes, artificial graphite, natural graphite, combusted material of organic polymer compound, carbon fiber and the like. Further, the conductive agent, the binder and the solvent is used as same as the case of the previously described cathode.

The separator can be any separator commonly used to a lithium secondary battery, and for example, it can be polyethylene, polypropylene, polyvinylidene fluoride or a multi-layer of 2 or more layers thereof. Further, a mixed multi-layer such as polyethylene/polypropylene bi-layer separator, polyethylene/polypropylene/polyethylene tri-layer separator, polypropylene/polyethylene/polypropylene tri-layer separator and the like also can be used.

The electrolyte charged into the lithium secondary battery may be a non-aqueous electrolyte or a known solid electrolyte wherein a lithium salt is dissolved therein.

The solvent of the non-aqueous electrolyte is not particularly limited, and it can be cyclic carbonates such as ethylene carbonate, propylene carbonate, butylene carbonate, vinylene carbonate and the like; chain carbonates such as dimethyl carbonate, methyl carbonate, diethylene carbonate and the like; esters such as methyl acetate, ethyl acetate, propyl acetate, methyl propionate, ethyl propionate, $\gamma$-butyrolactone and the like; ethers such as 1,2-dimethoxyethane, 1,2-diethoxyethane, tetrahydrofuran, 1,2-dioxane, 2-methyltetrahydrofuran and the like; nitriles such as acetonitrile and the like; amides such as dimethylformamide and the like; or a mixture thereof. They can be used alone or in combination. Particularly, a mixed solvent of the cyclic carbonate and chain carbonate is preferred.

Further, as the electrolyte, a polymer gel electrolyte wherein a polymer electrolyte such as polyethyleneoxide, polyacrylonitrile and the like is impregnated in an electrolytic solution; or an inorganic solid electrolyte such as LiI, $Li_3N$ and the like can be used.

In this case, the lithium salt can be one selected from a group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiSbF_6$, $LiAlO_4$, $LiAlCl_4$, $LiCl$ and $LiI$.

The following Examples are intended to illustrate the present invention without limiting its scope.

### Example 1

Four liters of distilled water was put into a reactor (capacity: 4L, power of rotating motor: 80W or more), and then nitrogen gas was supplied to the reactor at a rate of 0.5 liter/min to remove dissolved oxygen followed by stirring at 1,000 rpm while keeping the temperature of the reactor at 50 °C.

A 2.4M aqueous metal solution containing 58 mol% nickel sulfate, 14 mol% cobalt sulfate and 28 mol% manganese sulfate and a 0.2M ammonia solution were continuously fed to the reactor at rates of 0.3 and 0.03 liters/hour, respectively. Further, a 4.8 mole sodium hydroxide solution was fed to the reactor to adjust the pH to 11.

At this time, the rotation speed of the impeller was set to 1,000 rpm. The flow rate was controlled so that the average residence time of reactants in the reactor was about 6 hours, and after the reaction reached a steady state, the metal hydroxides as the reactants were further stayed for some time to obtain a metal hydroxide continuously. The metal hydroxide was filtered, washed with water, and dried in a hot-air dryer at 110°C for 15 hours.

The metal hydroxide was mixed with lithium hydroxide (LiOH) in a molar ratio of 1:1.06, firstly heat-treated (pre-calcination) by heating thereof at a heating rate of 2°C /min under air atmosphere followed by being maintained at 500 °C for 10 hours, and then, secondarily heat-treated (calcination) at 850°C for 15 hours under air atmosphere to obtain $Li_{1.06}(Ni_{0.58}Co_{0.14}Mn_{0.28})O_2$ cathode active material powder.

The cathode active material thus prepared, super-P as a conductive agent and polyvinylidene fluoride as a binder were mixed in a weight ratio of 85:7.5:7.5 to prepare slurry. The slurry was uniformly coated onto an aluminum foil having a thickness of 20 $\mu$m, and vacuum dried at 120 °C to obtain a cathode.

A coin-type battery was fabricated by using the cathode, a lithium foil as a counter electrode, a porous polyethylene film (Celgard 2300, Celgard LLC, thickness: 25 $\mu$m,) as a separator, and a 1 M $LiPF_6$ solution in a mixed solvent of ethylene carbonate and diethyl carbonate (1:1 by volume) as a liquid electrolyte solution in accordance with procedures well known in the art.

## Examples 2 to 5

The procedure of Example 1 was repeated except for controlling the amount of nickel sulfate, cobalt sulfate and manganese sulfate to obtain the molar ratio of Ni, Co and Mn as shown in Table 1.

## Comparative Examples 1 to 6

The procedure of Example 1 was repeated except for controlling the amount of nickel sulfate, cobalt sulfate and manganese sulfate to obtain the molar ratio of Ni, Co and Mn of the final cathode active material as shown in Table 1 to obtain cathode active materials and half coin cells.

In Table 1, the values of Ni, Co and Mn mean a molar ratio thereof in $Li_{1.06}(Ni_{1-x-y}Co_xMn_y)O_2$, respectively.

### TABLE 1

|  | Ni | Co | Mn |
|---|---|---|---|
| Exam. 1 | 0.58 | 0.14 | 0.28 |
| Exam. 2 | 0.58 | 0.105 | 0.315 |
| Exam. 3 | 0.8 | 0.067 | 0.133 |
| Exam. 4 | 0.7 | 0.1 | 0.2 |
| Exam. 5 | 0.5 | 0.166 | 0.333 |
| Comp. Exam. 1 | 0.8 | 0.1 | 0.1 |
| Comp. Exam. 2 | 0.7 | 0.15 | 0.15 |
| Comp. Exam. 3 | 0.58 | 0.21 | 0.21 |
| Comp. Exam. 4 | 0.58 | 0.28 | 0.14 |

## * Thermal Stability Test

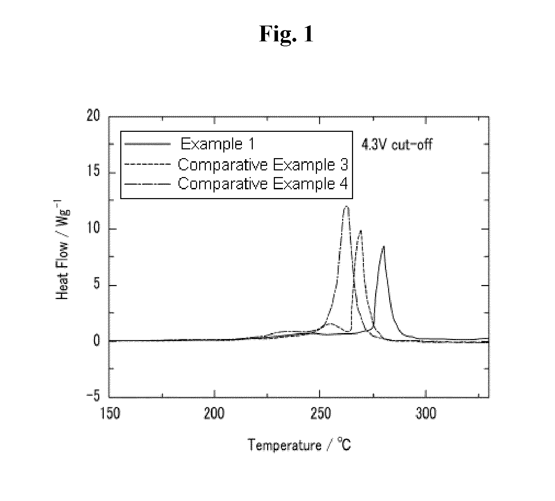

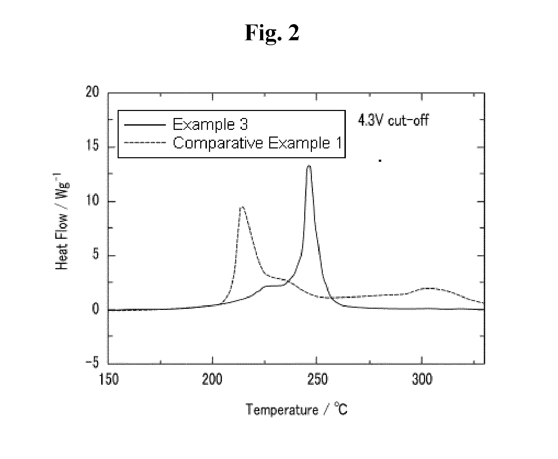

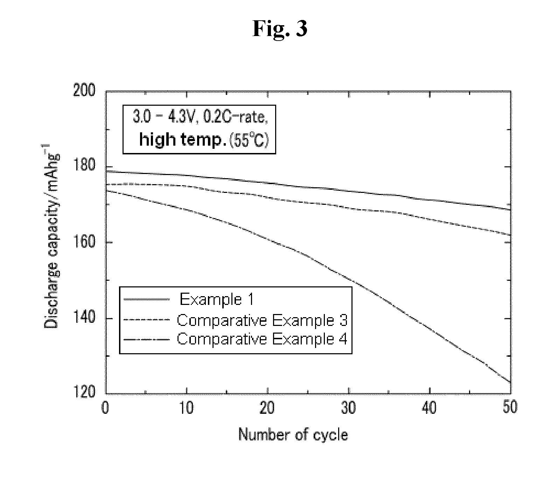

The thermal stabilities of the half cells prepared in Examples 1 and 3, and Comparative Examples 1, 3 and 4 were evaluated as follows. The prepared half cell was twice charged and discharged to the cut-off voltage of 3.0 V-4.3 V with 0.2 C and (formation process), and charged one time to the cut-off voltage of 4.3 V with 0.2 C. A cathode was collected from the charging-completed half cell under argon atmosphere, and then 5 mg cathode active material was obtained from the cathode followed by measuring the calorie change using a Differential Scanning Calolimetry (DSC) device. The calorie change was measured from the start point 50°C to 350°C, and the calculated heat values (integrated values of heat flow curve on DSC to temperature) were shown in Table 2. Further, the DSC results were shown in Figs. 1 and 3, and the temperatures where the heat peaks were expressed were shown in Tables 2 and 3. In Figs. 1 and 2, Y axis represents a heat flow (W/g).

### TABLE 2

|  | Ni | Co | Mn | Heat Temp. (°C) | Heat Value (J/g) |
|---|---|---|---|---|---|
| Exam. 1 | 0.58 | 0.14 | 0.28 | 277.4 | 1309 |
| Comp. Exam. 3 | 0.58 | 0.21 | 0.21 | 267.4 | 1539 |
| Comp. Exam. 4 | 0.58 | 0.28 | 0.14 | 260.7 | 174 |

Fig. 1 and Table 2 show heat temperature and heat value of the cathode active materials prepared with same Ni mol% and different Co and Mn molar ratio. The cathode active material of Example 1 having 1:2 molar ratio of Co and Mn showed higher heat temperature where the heat peak was expressed, and lower heat flow and heat value than the cathode active materials of Comparative Examples 3 and 4 having 1:1 and 2:1 molar ratio of Co and Mn, respectively. The heat temperature refers to a temperature when oxygen is degraded caused by being broken metal-oxygen bonds in the structurally unstable charged cathode active material when the surrounding temperature rises. Because the degraded oxygen may react with an electrolyte in the cell and cause explosion, high heat temperature means excellent thermal stability. Further, low heat flow means low heat value, and represents excellent thermal stability.

**TABLE 3**

|  | Ni | Co | Mn | Heat Temp. (°C) | Heat Value (J/g) |
|---|---|---|---|---|---|
| Exam. 3 | 0.8 | 0.066 | 0.133 | 253.4 | 1955 |
| Comp. Exam. 1 | 0.8 | 0.1 | 0.1 | 214.3 | 2465 |

Fig. 2 and Table 3 show the cases of the ratios of Co and Mn were 1:2 (Example 3) and 1:1 (Comparative Example 1) when the molar ratio of Ni was 80 mol%. As shown in Table 3, when the ratio of Co and Mn was 1:2 (Example 3), the heat temperature was high but the heat value was low.

**\* Cycle-life Characteristic**

In order to confirm the cycle-life characteristic of the half coin cells prepared according to Example 1 and Comparative Examples 3 and 4 at high temperature (life characteristic acceleration test), the formation process was conducted twice at room temperature under 3.0 to 4.3 V with 0.2 C, and then, charging and discharging were conducted 50 times under 3.0 to 4.3 V with 0.5 C at high temperature (55 ) to measure the cycle-life characteristic. Results were shown in Fig. 3 and Table 4.

After measuring the cycle-life characteristic of Example 1, Comparative Examples 3 and 4, the 1st cycle dis-charge capacity, the 50th discharge capacity and cycle-life were shown in Table 4. In Table 4, the cycle-life was expressed as a % value of 50th cycle discharge capacity/ 1st cycle discharge capacity.

**TABLE 4**

|  | Ni | Co | Mn | 1st cycle Discharge Capacity (mAh/g) | 50th cycle Discharge Capacity (mAh/g) | Cycle-Life (%) |
|---|---|---|---|---|---|---|
| Exam. 1 | 0.58 | 0.14 | 0.28 | 178.8 | 168.8 | 94.4 |
| comp. Exam. 3 | 0.58 | 0.21 | 0.21 | 175.1 | 161.6 | 92.3 |
| comp. Exam. 4 | 0.58 | 0.28 | 0.14 | 173.7 | 123.2 | 70.9 |

As shown in Table 4, it was confirmed that the cycle-life characteristic of Example 1 was very excellent, but the cycle-life characteristic of Comparative Example 3 was reduced, and the cycle-life characteristic of Comparative Example 4 was the worst.

In addition, as shown in Fig. 3, the high temperature cycle-life characteristic of Example 1 was very excellent, and therefore, it was confirmed that the active material comprising Ni in an amount of 58 mol% should have the molar ratio of Co and Mn of 1:2 or more.

Further, the cycle-life characteristics of cells of Example 3 and Comparative Example 1 having 80 mol% Ni and Example 4 and Comparative Example 2 having 70 mol% Ni, wherein the molar ratio of Co and Mn was 1:2 (Examples 3 and 4) and 1:1 (Comparative Examples 1 and 2) were measured, and the results were shown in Tables 5 and 6, respectively.

The cycle-life characteristic test was measured by twice subjecting the half coin cells prepared according to Examples 3 and 4, and Comparative Examples 1 and 2 to the formation process at room temperature (25 ) under 3.0 to 4.3 V with 0.2 C, and by charging and discharging 50 times under 3.0 to 4.3 V with 0.5 C. In Tables 5 and 6, the cycle-life was expressed as a % value of 50th cycle discharge capacity/ 1st cycle discharge capacity.

**TABLE 5**

|  | Ni | Co | Mn | 1st cycle Discharge Capacity (mAh/g) | 50th cycle Discharge Capacity (mAh/g) | Cycle-Life (%) |
|---|---|---|---|---|---|---|
| Exam. 3 | 0.8 | 0.066 | 0.133 | 190.9 | 165.3 | 86.6 |
| Comp. Exam. 1 | 0.8 | 0.1 | 0.1 | 195.1 | 155.1 | 79.5 |

**TABLE 6**

|  | Ni | Co | Mn | 1st cycle Discharge Capacity (mAh/g) | 50th cycle Discharge Capacity (mAh/g) | Cycle-Life (%) |
|---|---|---|---|---|---|---|
| Exam. 4 | 0.7 | 0.1 | 0.2 | 180.1 | 168.6 | 93.6 |
| comp. Exam. 2 | 0.7 | 0.15 | 0.15 | 181.3 | 155.2 | 85.6 |

As shown in Tables 5 and 6, the batteries of Examples 3 and 4 having 80 mol% and 70 mol% Ni, respectively and 1:2 molar ratio of Co and Mn of molar ratio showed better cycle-life characteristic than the batteries of Comparative Examples 1 and 2 having 1:1 molar ration of Co and Mn.

In addition, the cycle-life characteristic test was measured by_twice subjecting the half coin cells prepared according to Examples 1 to 5 to the formation process at room temperature (25 ) under 3.0 to 4.3 V with 0.2 C, and charged and discharged 50 times under 3.0 to 4.3 V with 0.5 C. In Table 7, the cycle-life was expressed as % value of 50th cycle discharge capacity/ 1st cycle discharge capacity.

**TABLE 7**

|  | Ni | Co | Mn | 1st cycle Discharge Capacity (mAh/g) | 50th cycle Discharge Capacity (mAh/g) | Cycle-Life (%) |
|---|---|---|---|---|---|---|
| Exam. 1 | 0.58 | 0.14 | 0.28 | 167.4 | 166.6 | 98.5 |
| Exam. 2 | 0.58 | 0.105 | 0.315 | 158.6 | 157.7 | 99.4 |
| Exam. 3 | 0.8 | 0.066 | 0.133 | 190.9 | 165.3 | 86.6 |
| Exam. 4 | 0.7 | 0.1 | 0.2 | 180.1 | 168.6 | 93.6 |
| Exam. 5 | 0.5 | 0.166 | 0.333 | 160.0 | 158.7 | 98.4 |

As shown in Table 7, it was confirmed that excellent cycle-life characteristic can be obtained when the mol% of Ni is 50 to 80 mol% as well as the molar ratio of Co and Mn is 1: 2 to 3.

Consequently, it was confirmed that the cathode active materials of Examples 1 to 5 maintain improved cycle-life characteristic and show more improved thermal stability as well as similar capacity compared with the cathode active materials of Comparative Examples 1 to 4.

While the invention has been described with respect to the above specific embodiments, it should be recognized that various modifications and changes may be made and also fall within the scope of the invention as defined by the claims that follow.

**Claims**

**1.** A cathode active material for a lithium secondary battery comprising a compound of formula (I):

$$Li_z(Ni_{1-x-y}Co_xMn_y)O_2 \qquad (I)$$

wherein, $0.97 \le z \le 1.1$,

$$0.5 \le 1\text{-}x\text{-}y \le 0.8,$$

x:y = 1:1.15 to 1:3.

**2.** A method of preparing the cathode active material for a lithium secondary battery, which comprises the steps of:

a) preparing an aqueous metal solution by adding a nickel raw material, cobalt raw material and manganese raw material to water, wherein the nickel raw material is used in an amount of 50 to 80 mol%, and the cobalt raw material and the manganese raw material are used as a mixture in an amount of 20 to 50 mol% wherein the molar ratio of the cobalt raw material and the manganese raw material is 1:1.5 to 1:3;

b) preparing a metal hydroxide by adding the aqueous metal solution, a base and a chelating agent to a reactor, stirring thereof, and coprecipitating the nickel, cobalt and manganese under inert atmosphere;

c) mixing the metal hydroxide and a lithium raw material to the molar ratio of 1:1 to 1:1.10, and subjecting thereof to the first heat-treatment at a heating rate of 2 to 10°C /min; and

d) subjecting the first heat-treated product to the second heat-treatment process.

3. The method of claim 2, wherein the concentration of the aqueous metal solution is 1.5 to 3 M.

4. The method of claim 2, wherein the base is an aqueous solution comprising a compound selected from a group consisting of sodium hydroxide, potassium hydroxide and a mixture thereof.

5. The method of claim 2, wherein the chelating agent is selected from a group consisting of ammonia, ethylenediamine and a mixture thereof.

6. The method of claim 2, wherein the aqueous metal solution is added to the reactor at a rate of 0.2 to 1 liter/hour.

7. The method of claim 2, wherein the aqueous metal solution, the base and the chelating agent are added to the reactor at a temperature of 40 to 60 .

8. The method of claim 2, wherein the first heat-treatment is conducted at a temperature of 450 to 500 .

9. The method of claim 2, wherein the second heat-treatment is conducted at a temperature of 800 to 900 .

10. A lithium secondary battery, which comprises a cathode comprising a cathode active material, which comprises a compound of formula (I); an anode comprising an anode active material; and a non-aqueous electrolyte:

$$Li_z(Ni_{1-x-y}Co_xMn_y)O_2 \qquad (I)$$

wherein, $0.97 \leq z \leq 1.1$,

$$0.5 \leq 1\text{-x-y} \leq 0.8,$$

x:y = 1:1.15 to 1:3.

# Fig. 1

**Fig. 2**

# Fig. 3

## INTERNATIONAL SEARCH REPORT

International application No.

**PCT/KR2010/001086**

| A. CLASSIFICATION OF SUBJECT MATTER |
| --- |
| *H01M 4/48(2010.01)i, H01M 4/04(2006.01)i, H01M 10/05(2010.01)i* |
| According to International Patent Classification (IPC) or to both national classification and IPC |

| B. FIELDS SEARCHED |
| --- |
| Minimum documentation searched (classification system followed by classification symbols)<br>H01M 4/48; H01M 4/04; H01M 4/485 |
| Documentation searched other than minimum documentation to the extent that such documents are included in the fields searched<br>Korean Utility models and applications for Utility models: IPC as above<br>Japanese Utility models and applications for Utility models: IPC as above |
| Electronic data base consulted during the international search (name of data base and, where practicable, search terms used)<br>eKOMPASS (KIPO internal) & Keywords: cathode active material, Coprecipitation, nickel, cobalt, manganese |

| C. DOCUMENTS CONSIDERED TO BE RELEVANT |
| --- |

| Category* | Citation of document, with indication, where appropriate, of the relevant passages | Relevant to claim No. |
| --- | --- | --- |
| X | KR 10-0815583 B1 (IUCF-HYU (INDUSTRY-UNIVERSITY COOPERATION FOUNDATION HANYANG UNIVERSITY)) 20 March 2008<br>Abstract, figures 1-8, paragraph <21> - paragaraph <150>, all claims | 1,10 |
| A | Abstract, figures 1-8, paragraph <21> - paragaraph <150>, all claims | 2-9 |
| X | KR 10-2005-0096019 A (HANYANG HAK WON CO., LTD.) 05 October 2005<br>Abstract, paragraph <34> - paragaraph <110>, all claims | 2-9 |
| A | Abstract, paragraph <34> - paragaraph <110>, all claims | 1,10 |
| A | KR 10-2006-0035547 A (IUCF-HYU (INDUSTRY-UNIVERSITY COOPERATION FOUNDATION HANYANG UNIVERSITY)) 26 April 2006<br>The entire document | 1-10 |

☐ Further documents are listed in the continuation of Box C.  ☒ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 OCTOBER 2010 (25.10.2010) | **26 OCTOBER 2010 (26.10.2010)** |
| Name and mailing address of the ISA/KR<br>Korean Intellectual Property Office<br>Government Complex-Daejeon, 139 Seonsa-ro, Daejeon 302-701, Republic of Korea<br>Facsimile No. 82-42-472-7140 | Authorized officer<br><br>Telephone No. |

Form PCT/ISA/210 (second sheet) (July 2009)

INTERNATIONAL SEARCH REPORT
Information on patent family members

International application No.

**PCT/KR2010/001086**

| Patent document cited in search report | Publication date | Patent family member | Publication date |
|---|---|---|---|
| KR 10-0815583 B1 | 20.03.2008 | NONE | |
| KR 10-2005-0096019 A | 05.10.2005 | NONE | |
| KR 10-2006-0035547 A | 26.04.2006 | EP 1831943 A1 | 12.09.2007 |
| | | JP 2008-521196 A | 19.06.2008 |
| | | US 2008-0160410 A1 | 03.07.2008 |
| | | WO 2006-070977 A1 | 06.07.2006 |

Form PCT/ISA/210 (patent family annex) (July 2009)